Europäisches Patentamt

European Patent Office

Office européen des brevets

(11) Publication number: **0 336 910**
**A1**

# EUROPEAN PATENT APPLICATION

(21) Application number: **89830150.2**

(22) Date of filing: **05.04.89**

(51) Int. Cl.⁴: **B 64 D 17/80**

(30) Priority: **06.04.88 IT 4250788**

(43) Date of publication of application:
**11.10.89 Bulletin 89/41**

(84) Designated Contracting States:
**BE DE ES FR GB GR IT NL**

(71) Applicant: **Comelli, Giordano**
**Via Tintoretto 8**
**I-43100 Parma (IT)**

(72) Inventor: **Comelli, Giordano**
**Via Tintoretto 8**
**I-43100 Parma (IT)**

(54) Pneumatic launching device for rescue parachutes for aerodines and aerostats.

(57) The invention regards a launching device for rescue parachutes for small aircraft capable of launching the parachute with adequate force for correct functioning. The power is supplied by a compressed gas stored in a gas cylinder, which is freed by a rapid release valve: the shove which the parachute receives, throws it into the air, swelling it up and this, once opened, remains connected to the aircraft by a rope. The parachute is held inside a container made up of a base which is fixed to the mobile parts of the device and of a lid which is disposed of during the release. The lid is held fast against the base by set elements whose breakage is caused by the expansion of the gas. The functioning of the device is operated by the traction of a handle which by means of a cable contained inside a sheath, frees a spring: this will push the shutter of the rapid release valve, thus letting out the pressure energy of the gas. A safety-catch is situated on the device, which joins the mobile parts to the fixed parts, thus blocking them: this safety-catch blocks the device even if this is accidently operated.

The gas charge can be checked periodically by means of a gauge and the parachute easily inspected.

FIG. 1

EP 0 336 910 A1

Bundesdruckerei Berlin

## Description

### Pneumatic launching device for rescue parachutes for aerodines and aerostats.

The invention regards a launching device for rescue parachutes for motor hang-gliders, for hang-gliders without engines, for extra-light aeroplanes and for other kinds of aerodines and aerostats, capable of launching the parachute in a suitable direction and with adequate force for its correct functioning. The device transmits a strong push against the parachute which, once separated from it, continues its course in the air, stretching out through inertia. The parachute therefore swells up due to the effect of the movement of the aircraft in the air and once opened, remains attached to the aircraft which bears the weight and slows down the fall.

In extra-light aviation, the modest speeds and weights permit easy use of rescue parachutes which can be activated in case of necessity. Various sources of energy have been used for the extraction or the expulsion of such a parachute: the pilot's human energy, the aerodynamic force of resistence in the air, the elastic force of return of special elements (springs and rubber band), energy derived from inflammable or explosive powders. The use of any one of these forms of energy imposes a special shape on the device and at the same time gives it its qualities and defects. In order to judge the efficiency of one or other of the constructive geometries, the following discriminating criteria can be employed: the dynamics of the opening up of the parachute, the time needed for the opening of the parachute, the reliability of the source of energy, the security against accidental activating. As for the dynamics of the spreading out of the lifting surfaces, the various devices can be interpreted as being expulsive, which expel the whole of the parachute which as a consequence, begins to spread out in the sequence - rope - funicolar bundle - lifting surfaces, and extracting, which extract the parachute by beginning on one side, at the top.

In the case of a rescue parachute for aircraft the first shape gives the parachute greater possibility of moving away from the aircraft without getting entangled, because during the separation stage the parachute is still protected in its container with which it is thrown and so the lifting surfaces are unlikely to get hooked in obstacles like cables, propellers, wings,etc.

The time needed to expel the parachute is of great importance: in certain situations it can be fundamental to the safety of the pilot: because of this, the quantity of energy available is an extremely important characteristic for an emergency parachute.

Besides, each source of energy used, presents characteristics of intrinsic safety and thus more simple realizations are preferred to complex ones. The launching device for an emergency parachute must also offer the guarantee of functioning only when this is required, as accidental functioning (not required) on land or in the air can lead to dangerous situations.

As for energetic choice of pressure power, the said device makes use of a flameproof gas which is compressed and stored in a gas cylinder (1). The rapid and complete opening of the valve (2) placed on the gas cylinder frees the gas which it contains the leads it into the chamber(12) which is delimited on one side by a closed bulging bottom (13) and on the other by a mobile piston (14) whose pneumatic adherence to the side of the cylinder (4) is assured by a rubber packing (15).

The gas imposes a strong shove on the piston and on the parts connected to it. It is possible to define these elements "mobile parts" and they are made up of the piston, and base of the container of the parachute (7), and a tube which acts as a rafter (16), which connects them in a fixed manner. With this geometry, the parachute is placed on the same axis as the cylinder and receives the shove caused by the gas on the piston directly . The rafter is controlled in its movement inside the cylinder at one end by the piston and at the other by a guiding ring (18) which is blocked at the muzzle of the cylinder by a ring nut (19).

The parachute is packed in the container composed of a base (7) and a lid which is disposed of during the release (8) and which is held fast against the base by one or more elastic elements (9). These elastic elements are freed during the initial stage of the movement of the mobile part of the device by the tearing of one or more rip elements (21) to which they are fixed. The rip elements (they could be made up of strings, cords, ribbons, bolts, in plastic material, etc.), placed in a special cavity (20) connect the base of the parachute to the ring nut at the muzzle; their breakage is caused by the moving away of the mobile part of the device as a result of the expansion of the gas in the cylinder. Special thickenings or knots (22) allow the rip elements to break in the part between two knots, thus freeing the elastic elements from the device.

The triple function of the rip elements consists of :

a) keeping the mobile part in hold with the fixed part,

b) increasing the launching power and so allowing the mobile part to begin its own movement only on reaching a higher pressure value inside the cylinder, c) freeing when torn, the elastic elements which hold the lid in position.

At the end of the stroke, while the mobile part of the device comes to a halt, the parachute is separated from it and continues its movement in the air through inertia. Once unfolded in its constituent parts, in a sequence dictated by a refolding in use and opened, the parachute remains connected by a long binding rope which has the role of keeping the strings away from the side of the aircraft in which they could get entangled.

The binding rope is hooked to the aircraft's structure in a barycentral position of strenght capable of bearing violent shocks caused by the opening up of the parachute and allowing the means a normal landing attitude, even in the case of forced landing.

At this point, the technical details which allow the correct functioning of the device will be examined. The stages of the movement of the mobile part are automatic and are arranged according to a fixed sequence, depending on the shape of the device. The only action which must be carried out in order to set the launching device working, is the traction of the operating handle (11). By appliying a strong traction on the operating handle, the locking plug (6) of the rapid-release device is freed by a cable (26) contained in a special sheath (27).

In order to prevent accidental or involuntary activating of the device when the aircraft in on the ground, two safety-catches are provided, one on the operating handle and the other (17) on the internal, mobile part of the cylinder. These safety-catches, which must be positioned each time the aircraft is not flying, join the mobile part with the fixed one, by blocking the device. In the event of accidental operating, the plug will bear the thrust of the gas by transverse stress.

A rapid release gadget (5) opens the valve on the cylinder in a fast, complete and irreversible manner. The rapid release gadget is made up of a set of elements which hold a spring (23) in compression which, once freed, will go and hit with adequate force, against the manoeuvring rod (3) of the shutter of the valve on the gas cylinder, thus allowing the passage of the gas from the gas cylinder to expansion chamber of the cylinder itself.

The lever (25) has the function of decreasing the traction stress needed to pull out the locking plug (6). It achieves this through the particular geometrical shape of the forces applied to it. The lever is an isostatic structure in which, owing to the presence of the wheel (24) the forces applied to it assume particular direction depending on that type of constraint and its balance will be guaranteed by a transverse stress of reduced intensity on the plug, for the numerical values adopted by about one-seventh of the force exercised by the spring. The stress needed to pull out the plug will be further reduced, compared to the transverse stress which it is subjected, in proportional measure, to the coefficient of friction, between the surface of the plug and that of its seating. With this rapid release gadget, one obtains, by applying a relatively low force, the guarantee of a strong, fast and complete action of the spring on the valve which, once triggered off, becomes irreversible.

As a consequence, the launching consists of one sole action and its power dependent on the components installed, will be maximum, independently of the speed and the operating force of the handle.

The lid will be disposed of during the launchin and so will the elastic elements. However these will not be a danger for people on the ground, as they are very lightweight.

With this invention, we believe we have ideated a new solution to launching device for rescue parachutes, characterized by special advantages, some of which however are present in former solutions.

We feel we have adopted the correct dynamics for the unforlding process of the lifting surfaces and that we have found in compressed air a strong source of power for a rapid unfolding of the same.

The constructive shape of the device, besides, has been devised in order to have easy accessibility to the electrical charge (checking and reloading of the gas cylinder) and easy access for periodical folding of the lifting surfaces which allows straightforward maintenance. The device thus assembled, can be equipped of a safety-catch for all the operating stages.

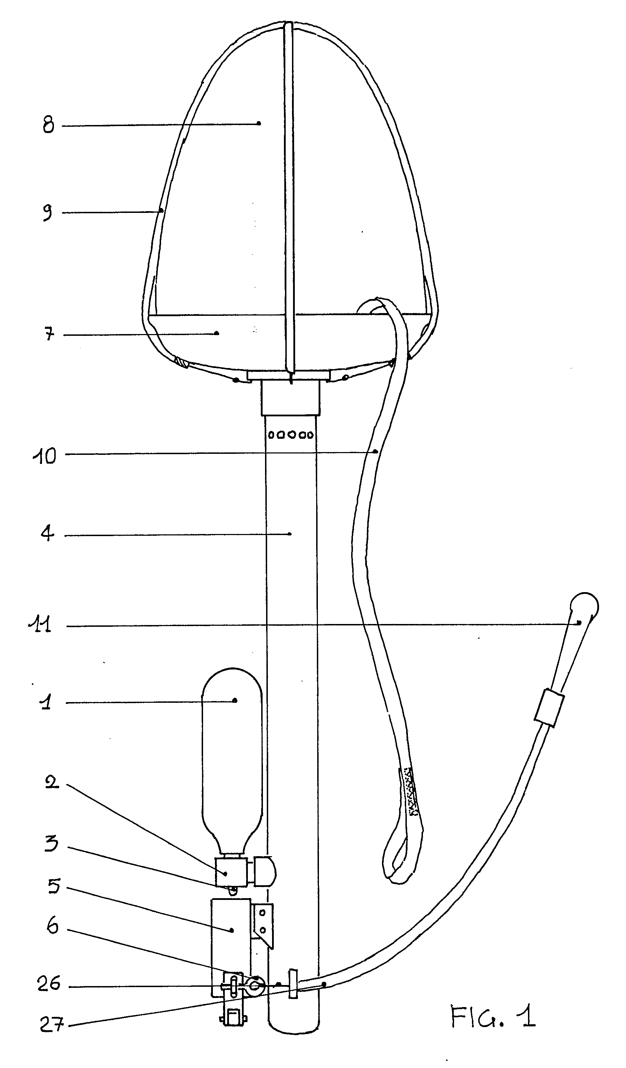

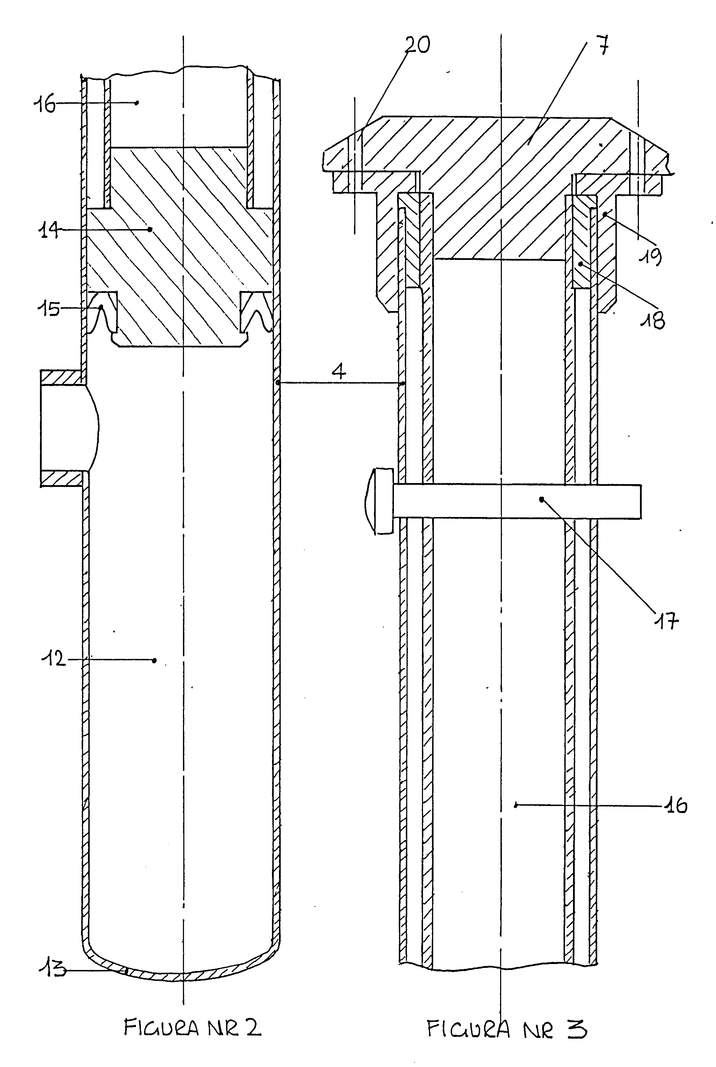

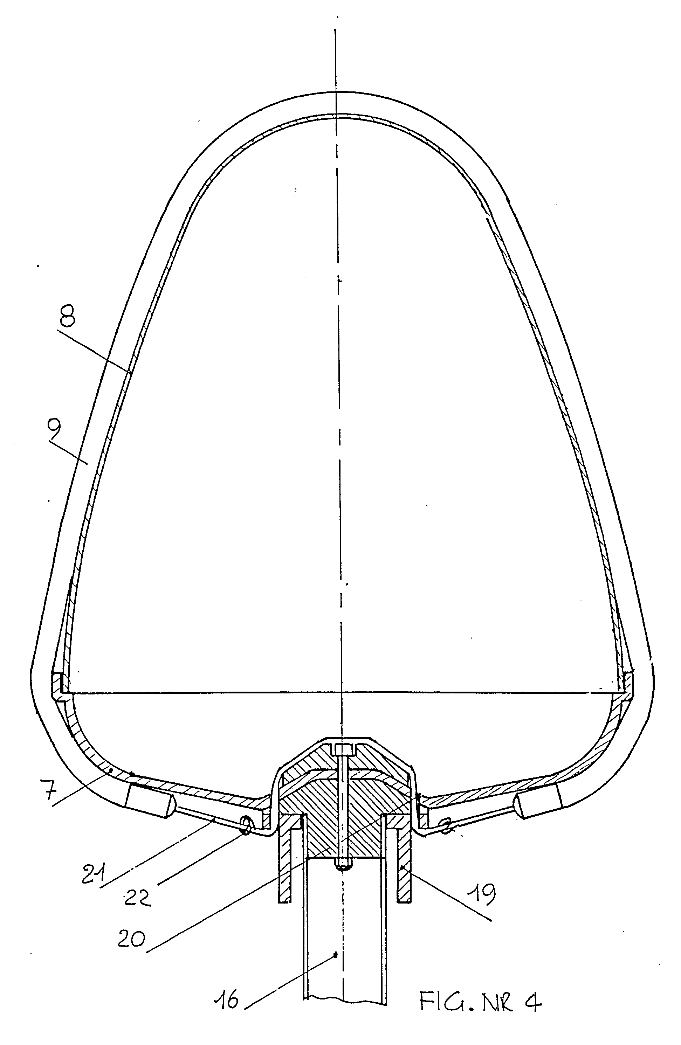

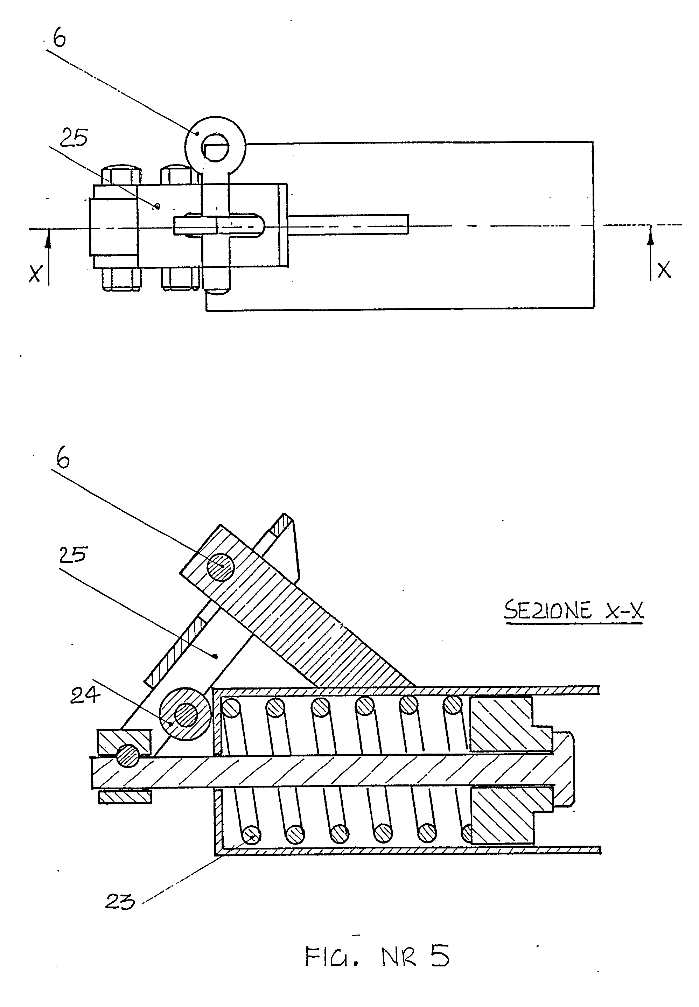

In the four tables enclosed with this description, the following are shown: in figure no.1, the complete drawing of the device; in figures no.2 and no.3, the section of the two parts of the body of the device; in table no.4, the section of the parachute container; in table no.5, the display and the section of the rapid release gadget.

## Claims

1. Launching device for rescue parachutes for any type of aerodine and aerostats characterized by the use of a flameproof compressed gas which is stored in a gas cylinder (1) as a source of power.

2. Device, in accordance with the prefatory remark of claim 1, characterized by the transformation of the potential energy of the gas into cinetic energy of the mobile parts (14,16,7) obtained inside a cylinder which is closed off at one end by a blind bottom (13) and delimited at the other by a mobile piston (14).

3. Device, in accordance with the prefatory remark of claim 1, characterized by the use of a valve (2) for rapid exhaust compressed gases in order to allow the outflow of the gas from the gas cylinder stated in claim 1 in a more or less instantaneous manner.

4. Device, in accordance with the prefatory remark of claim 1, characterized by the opening of the valve stated in claim 3, by means of the shove obtained from the spring (23).

5. Device, in accordance with the prefatory remark of claim 1, characterized by the release of the spring stated in claim 4, by means of a gadget (5) which makes use of an isostatic lever (25) placed at one end of the spring on the opposite side of the valve, in order to demultiply the actioning stress; the whole of the rapid release gadget is conceived with the aim of rendering total and irreversible the action of the valve.

6. Device, in accordance with the prefatory remark of claim 1, characterized by the operating of the rapid release gadget, stated in claim 5, by the pulling out of a plug (6) which due to the opposing sides, keeps the isostatic lever blocked.

7. Device, in accordance with the prefatory remark of claim 1, characterized by a link between the piston (14) and the base of the parachute container obtained by a tube which functions as a rafter (16) by a parachute container made up of two parts: a base (7) joined to the rafter and a lid (8) disposable during launching.

9. Device, in accordance with the prefatory remark of claim 1, characterized by the use of rip elements (21) set to strengthen the ballistic features of the launch and to give rise to the opening of the parachute container.

10. Device, in accordance with the prefatory remark of claim 1, characterized by the use of one or more elastic elements (9)-capable of holding the lid (8) fast against the base (7) and of holding the base (7) fast against the cylinder (4).

11. Device, in accordance with the prefatory remark of claim 1, characterized by the use of a plug as a safety-catch (17) which joins the rafter (16) to the external cylinder (4).

FIG. 1

FIGURA NR 2

FIGURA NR 3

8

9

7

21

22

20

16

19

FIG. NR 4

SEZIONE X-X

FIG. NR 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 122 149 (SMITH) <br> * Page 1, lines 74-89 * | 1-3 | B 64 D 17/80 |
| X | US-A-2 612 332 (DROZINSKY) <br> * Column 3, lines 13-50 * | 1,2 | |
| X | BE-A- 428 214 (WAUTERS) <br> * Page 3, lines 15-21 * | 1,2 | |
| A | DE-A-3 013 863 (DIETL) <br> * Whole document * | 1 | |

TECHNICAL FIELDS
SEARCHED (Int. Cl.4)

B 64 C
B 64 D

The present search report has been drawn up for all claims

| Place of search | Date of completion of the search | Examiner |
|---|---|---|
| THE HAGUE | 27-06-1989 | HAUGLUSTAINE H.P.M. |